# EUROPEAN PATENT SPECIFICATION

(11) **EP 2 354 891 B1**
(45) Date of publication and mention of the grant of the patent: **11.09.2013**
(21) Application number: 11152096.1
(22) Date of filing: 25.01.2011
(51) Int. Cl.: G06F 1/32, G06F 13/38, H04W 52/02

(54) **Information processing apparatus and method of controlling the same**
Informationsverarbeitungsvorrichtung und Steuerverfahren dafür
Appareil de traitement d'informations et son procédé de contrôle

(30) Priority: 29.01.2010 JP 2010019464
(43) Date of publication of application: 10.08.2011
(73) Proprietor: CANON KABUSHIKI KAISHA, Ohta-ku Tokyo 146-8501 (JP)
(72) Inventor: Yamamoto, Tetsuya, Ohta-ku Tokyo (JP)
(74) Representative: Foxon, Rachel Siobhan

(56) References cited:
- EP-A1- 2 059 012
- US-A- 5 913 068
- US-A1- 2008 244 227
- US-A1- 2009 109 230

## Description

### BACKGROUND OF THE INVENTION

### Field of the Invention

The present invention relates to an information processing apparatus and a method of controlling the same.

### Description of the Related Art

An information processing apparatus having a communication function requires higher performance in communication processing and other information processing with increasing amounts of data to be processed or communicated. Japanese Patent Laid-Open No. 6-231088 describes a multi CPU scheme using a plurality of central processing units (to be referred to as "CPUs" hereinafter) to improve information processing performance.

When a plurality of CPUs are provided in an information processing apparatus having a communication function to improve the performance, and inoperative CPUs are always on, power is wasted. Japanese Patent Laid-Open No. 11-327706 describes a technique of dividing the electronic circuits of an electronic device having a plurality of functions into blocks and on/off-controlling the power supply for each block so as to prevent wasteful power consumption.

Japanese Patent Laid-Open No. 2000-349854 describes a power saving technique of changing the operation clock of the CPU of a communication apparatus in accordance with the transfer rate of the communication interface. However, power saving by changing the operation clock of the CPU is limited because the operation clock frequency of the CPU has a lower limit. In the information processing apparatus employing the multi CPU scheme, when a CPU which is executing processing for communication is powered off for power saving, the communication is temporarily interrupted.

US 2008/0244227 discloses a design structure for allocating processing functions between a primary processor and a secondary processor. The primary processor performs routine processing duties while the secondary processor is in a sleep state. When the load on the primary processor is deemed to be excessive, the secondary processor is awakened from a sleep state and assigned to perform processing functions that would otherwise need to be performed by the primary processor. US 2009/0109230 discloses methods and apparatuses to dynamically optimize power and performance in a data processing system by employing a redistribution of computational processes among a plurality of subsystems wherein each of the subsystems may be capable of performing the same computational process.

### SUMMARY OF THE INVENTION

In order to solve the above-described problems, an aspect of the present invention provides a technique of switching a processing unit configured to control communication processing without interrupting communication.

According to an aspect of the present invention, an information processing apparatus as specified in claims 1 to 11 is provided.

According to another aspect of the present invention, a method as specified in claim 12 is provided.

According to still another aspect of the present invention, a computer program as specified in claim 13 is provided.

Further features of the present invention will become apparent from the following description of exemplary embodiments (with reference to the attached drawings).

### BRIEF DESCRIPTION OF THE DRAWINGS

The accompanying drawings, which are incorporated in and constitute a part of the specification, illustrate embodiments of the invention, and together with the description, serve to explain the principles of the invention.

Fig. 1 is a block diagram showing an exemplary arrangement of a communication apparatus according to the first embodiment;

Fig. 2 is a view showing an exemplary memory map of a processor system according to the first embodiment;

Fig. 3 is an exemplary flowchart for explaining communication processing switching according to the first embodiment;

Fig. 4 is an exemplary flowchart for explaining communication processing switching according to the second embodiment;

Fig. 5 is a view showing exemplary CPUs which handle communication processing in correspondence with power supply types and information transfer rates according to the second embodiment;

Fig. 6 is an exemplary flowchart for explaining communication processing switching according to the third embodiment; and

Fig. 7 is a view showing exemplary CPUs which handle communication processing in correspondence with QoS types and communication modes according to the third embodiment.

### DESCRIPTION OF THE EMBODIMENTS

Various embodiments of the present invention will now be described with reference to the accompanying drawings. In the following embodiments, a communication apparatus that is an example of an information processing apparatus will be explained.

### <First Embodiment>

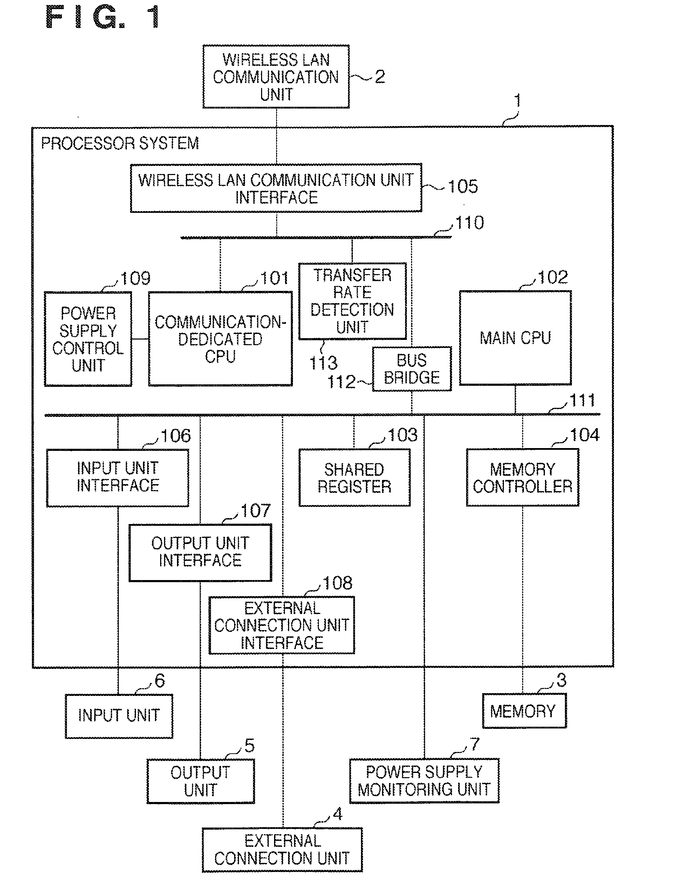

An exemplary arrangement of a communication apparatus according to the first embodiment will be described with reference to Fig. 1. The communication apparatus can change the information transfer rate when transferring packet data or the like to another apparatus so the information transfer rate can vary. The communication apparatus includes a processor system 1, wireless LAN communication unit 2, memory 3, external connection unit 4, output unit 5, input unit 6, and power supply monitoring unit 7. The wireless LAN communication unit 2 serves as a transceiving unit which performs communication with an external device based on IEEE 802.11n. The external connection unit 4 is connected to the outside of the communication apparatus. The output unit 5 outputs data or the state of the communication apparatus. The input unit 6 inputs data or various settings designated by the user to the processor system 1. The power supply monitoring unit 7 monitors the power supply type and/or remaining battery level.

The processor system 1 has the following arrangement. A main CPU 102 for performing main processing controls the entire processor system 1. For example, when the communication apparatus is a printer, the main CPU 102 controls various kinds of processing concerning printing. When the communication apparatus is a camera, the main CPU 102 controls various kinds of processing concerning image forming. The main CPU 102 can control communication processing using the wireless LAN communication unit 2, too. A communication-dedicated CPU 101 can also control communication processing using the wireless LAN communication unit 2. Communication processing control by each CPU includes TCP/IP processing, WPA (Wi-Fi Protected Access) processing such as encryption key exchange, and IP address solution processing to be performed by the CPUs.

The process load of communication processing is generally large, and communication processing by the main CPU 102 may affect main processing such as printing or image forming. For this reason, the communication-dedicated CPU 101 handles communication processing. On the other hand, in this embodiment, when the information transfer rate is lower than a predetermined threshold, communication processing is handled not by the communication-dedicated CPU 101 but by the main CPU 102, thereby saving power of the overall communication apparatus while maintaining throughput.

A shared register 103 is used by the communication-dedicated CPU 101 and the main CPU 102 to share information. A memory controller 104 controls write- and read-access to the memory 3. A wireless LAN communication unit interface 105 exchanges data with the wireless LAN communication unit 2. An input unit interface 106 exchanges data with the input unit 6. An output unit interface 107 exchanges data with the output unit 5. An external connection unit interface 108 exchanges data with the external connection unit 4. A power supply control unit 109 controls power supply to the communication-dedicated CPU 101.

A communication-dedicated bus 110 is a bus which connects the communication-dedicated CPU 101, wireless LAN communication unit interface 105, transfer rate detection unit 113, and bus bridge 112. A main bus 111 is a bus which connects the input unit interface 106, output unit interface 107, external connection unit interface 108, shared register 103, power supply monitoring unit 7, and memory controller 104 to each other.

The bus bridge 112 relays data flowing through the communication-dedicated bus and that flowing through the main bus so transfers data from the communication-dedicated bus to the main bus and vice versa. The transfer rate detection unit 113 receives an information transfer rate value sent from the wireless LAN communication unit 2 and writes the value at an address 0x7FFFFFF on a memory map to be described later.

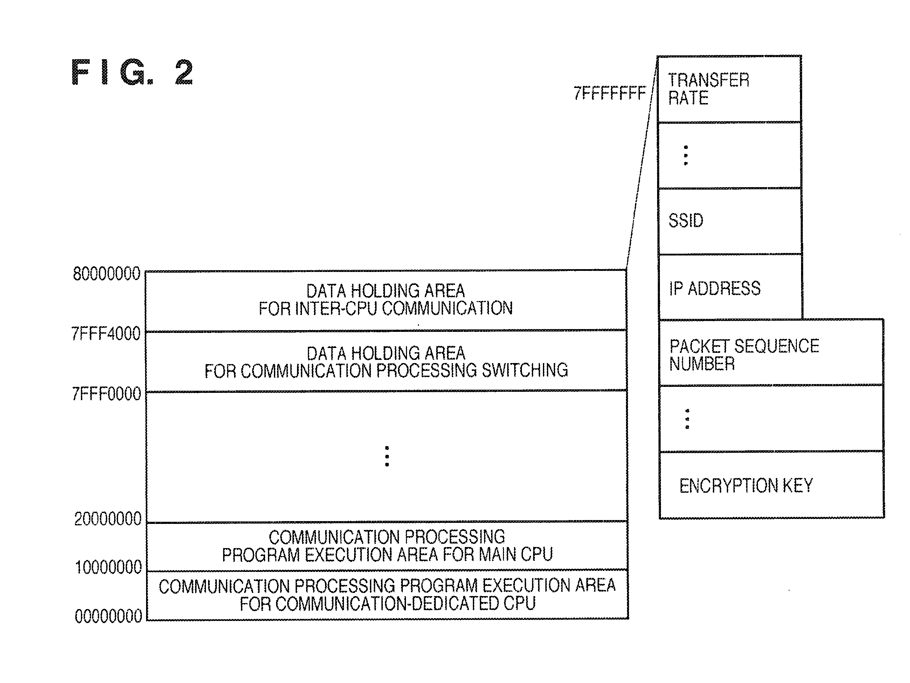

Fig. 2 shows an exemplary memory map in the memory 3 of the processor system according to the first embodiment. Addresses 0x00000000 to 0xFFFFFFFF correspond to a communication processing program execution area to be used by the communication-dedicated CPU 101. Addresses 0x10000000 to 0x1FFFFFFF correspond to a communication processing program execution area to be used by the main CPU 102. Addresses 0x7FFF0000 to 0x7FFF3FF correspond to a data holding area to be used for communication processing switching. This area is used to prevent interruption of communication processing when it is switched between the main CPU 102 and the communication-dedicated CPU 101. Addresses 0x7FFF4000 to 0x7FFFFFF correspond to a data holding area to be used for inter-CPU communication. This area is used to share data between the main CPU 102 and the communication-dedicated CPU 101.

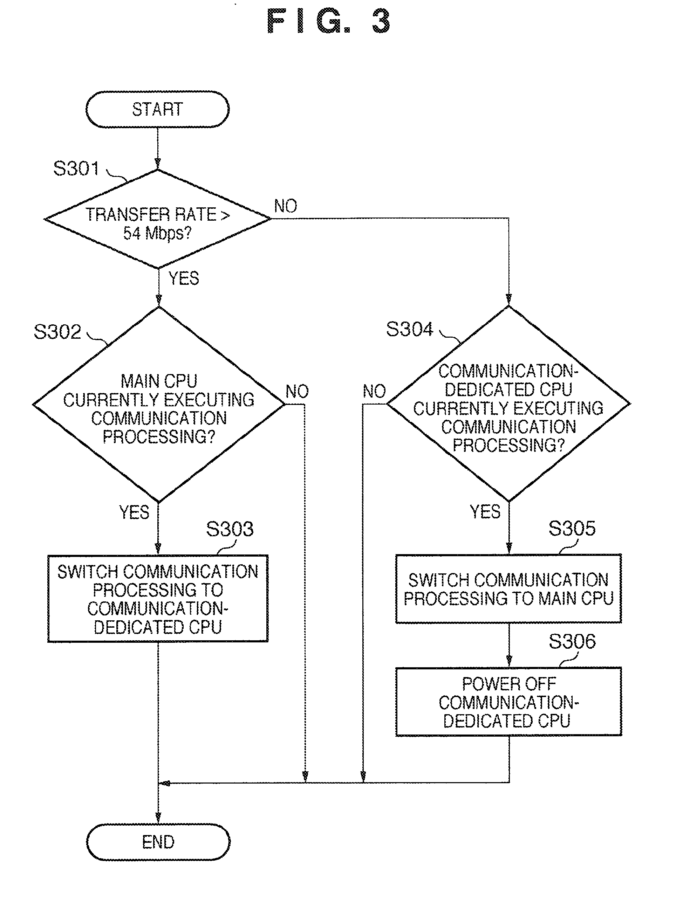

An exemplary operation of the main CPU 102 will be described with reference to Fig. 3 concerning communication processing switching in the arrangements shown in Figs. 1 and 2. The description will be made assuming that the threshold of the information transfer rate for communication processing switching is set at 54 Mbps. In step S301, the main CPU 102 checks the current information transfer rate written at the address 0x7FFFFFF of the memory 3. The main CPU 102 determines whether the information transfer rate is more than 54 Mbps.

If YES in step S301, the process advances to step S302. In step S302, the main CPU 102 determines whether it is currently executing communication processing. If the main CPU is not executing communication processing (NO in step S302), the processing ends. If the main CPU is executing communication processing (YES in step S302), the process advances to step S303. In step S303, the main CPU 102 performs processing to switch the communication processing to the communication-dedicated CPU 101.

If NO in step S301, the process advances to step S304. In step S304, the main CPU 102 checks whether the communication-dedicated CPU 101 is executing communication processing. If the communication-dedicated CPU is not currently executing communication processing, the processing ends. If the communication-dedicated CPU 101 is currently executing communication processing, the process advances to step S305. In step S305, the main CPU 102 performs switching processing to perform the communication processing itself. In step S306, the main CPU 102 instructs the power supply control unit 109 to power off the communication-dedicated CPU 101.

At a low information transfer rate, even if the communication-dedicated CPU 101 handles the communication processing, the throughput is not expected to significantly improve, and extra power may be consumed because both the main CPU 102 and communication-dedicated CPU 101 are powered. On the other hand, when the main CPU 102 performs the communication processing, the throughput is rarely affected. Hence, when the information transfer rate is lower than a predetermined threshold, the main CPU 102 handles communication processing, and power supply to the communication-dedicated CPU 101 is stopped, thereby reducing power consumption while maintaining throughput. So the threshold is preferably set based on a maximum information transfer rate at which the main CPU 102 can handle communication processing without significantly affecting throughput of the processor system.

In step S303, communication processing switching from the main CPU 102 to the communication-dedicated CPU 101 is performed in the following way. First, the main CPU 102 writes and stores, in the data holding area for communication processing switching (addresses 0x7FFF0000 to 0x7FFF4000), current parameter values such as the packet sequence number and the dynamic encryption key, which are communication processing parameters necessary for making the communication-dedicated CPU take over the current communication processing without interruption. The communication-dedicated CPU 101 can continue the communication processing without interruption by referring to the values written in the area.

After switching the CPU, the communication processing is handled by the communication-dedicated CPU 101. To appropriately operate the system, the current values of SSID (Service Set Identifier), IP address, and the like are written in the data holding area for inter-CPU communication (addresses 0x7FFF4000 to 0x7FFFFFFF)

In step S305, communication processing switching from the communication-dedicated CPU 101 to the main CPU 102 is performed in the following way. The communication-dedicated CPU 101 writes and stores, in the data holding area for communication processing switching (addresses 0x7FFF0000 to 0x7FFF3FFF) the packet sequence number and the dynamic encryption key which are communication processing parameters necessary for enabling the main CPU take over the current communication processing without interruption. The main CPU 102 can take over the communication processing without interruption by referring to the values written in the area.

With the above-described processing, switching is performed so that the communication-dedicated CPU 101 handles communication processing for high-speed communication when the information transfer rate exceeds the threshold, and the main CPU 102 handles communication processing when the information transfer rate is equal to or lower than the threshold. If the information transfer rate is high, the communication-dedicated CPU 101 performs communication processing, and the process load on the main CPU 102 is thus decreased. On the other hand, if the information transfer rate is low, the main CPU 102 performs communication processing, and the communication-dedicated CPU 101 is powered off, thereby suppressing power consumption.

In the first embodiment, the transfer rate detection unit 113 is independently provided. However, the detection unit may be implemented by a program on the communication-dedicated CPU 101 or the main CPU 102. In the above description, when the main CPU 102 handles communication processing, the communication-dedicated CPU 101 is powered off. Instead of completely powering off, only several circuits may be powered off. That is, the power supply control unit 109 may limit power supply to the communication-dedicated CPU 101.

As described above, according to the embodiment, handling of communication processing is switched between the main CPU 102 and the communication-dedicated CPU 101 in accordance with the information transfer rate, thereby reducing power consumption while maintaining throughput. When switching handling of communication processing, communication parameters such as the packet sequence number are written in a predetermined area on the memory 3, thereby continuing the communication processing without interruption. Note that the shared register 103 may be used as the storage location of the communication parameters instead of the memory 3.

### <Second Embodiment>

The arrangement of a communication apparatus according to the second embodiment is the same as that shown in Fig. 1, and a description thereof will not be repeated. In the second embodiment, a case will be explained in which the communication apparatus operates in one of a battery mode using a battery (not shown) and a normal power supply mode using an external power supply (not shown). The communication apparatus can change the information transfer rate threshold, serving as the condition for switching handling of communication processing, depending on its power supply state, that is, operation mode.

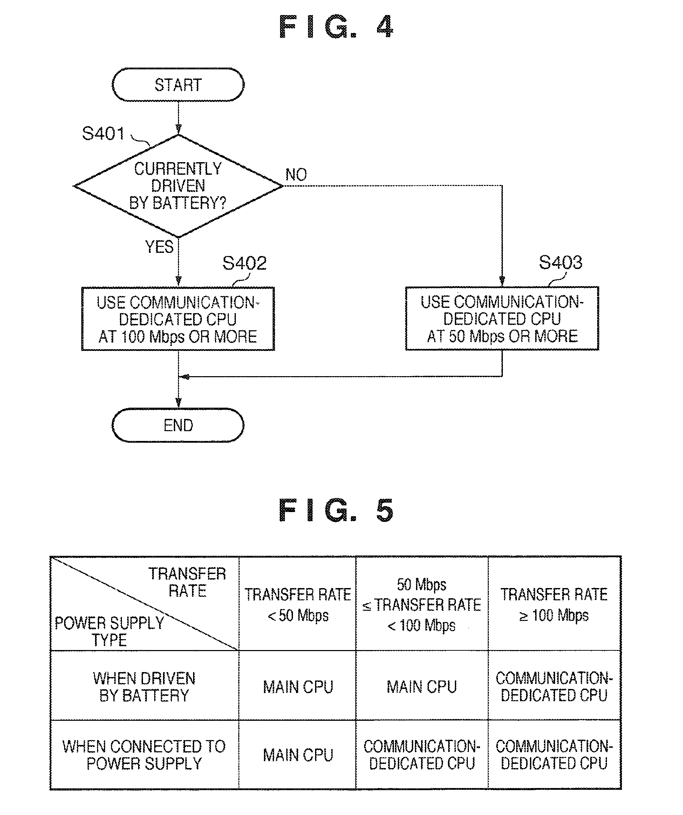

The switching condition deciding method will be described with reference to the exemplary flowchart of Fig. 4 concerning the operation of a main CPU 102. This example will be described assuming that a first threshold of 50 Mbps and a second threshold of 100 Mbps are used as communication rate thresholds for communication processing switching. In step S401, the main CPU 102 determines based on information from a power supply monitoring unit 7 for power supply control whether the communication apparatus is being driven in the normal power supply mode or battery mode. If the apparatus is being driven in the battery mode, the process advances to step S402. Otherwise, the process advances to step S403.

In step S402, the main CPU 102 decides to make a communication-dedicated CPU 101 handle communication processing at an information transfer rate of 100 Mbps or more, or perform communication processing by itself at an information transfer rate lower than 100 Mbps. That is, the information transfer rate threshold for communication processing switching is set as 100 Mbps in battery mode.

In step S403, the main CPU 102 decides to make the communication-dedicated CPU 101 handle communication processing at an information transfer rate of 50 Mbps or more, or perform communication processing by itself at an information transfer rate lower than 50 Mbps. That is, the information transfer rate threshold for communication processing switching is set as 50 Mbps in normal power supply mode.

Based on the set threshold, the main CPU 102 performs the processing in Fig. 3 described in the first embodiment. The operation of switching communication processing between the main CPU 102 and the communication-dedicated CPU 101 is the same as that described in the first embodiment, and a description thereof will not be repeated.

As described above, in the second embodiment, the CPU that handles communication processing is switched depending on the power supply type and the information transfer rate. As shown in Fig. 5, in the battery driving mode, when the information transfer rate is lower than 100 Mbps, that is the second threshold, the main CPU 102 performs communication processing. When the information transfer rate is equal to or higher than the second threshold, the communication-dedicated CPU 101 performs communication processing. In the normal power supply mode in which the power supply is connected, when the information transfer rate is equal to or higher than the first threshold, the communication-dedicated CPU 101 performs communication processing. If the information transfer rate is lower than the first threshold, the main CPU 102 performs communication processing.

As in the first embodiment, the communication-dedicated CPU 101 is powered off when not used. Since the need to use the communication-dedicated CPU 101 can be reduced as much as possible in the battery driving mode, the communication apparatus can operate at lower power. Note that an example has been described above in which the information transfer rate threshold is changed in accordance with the power supply type. The information transfer rate threshold may be changed in consideration of the remaining battery level, too. For example, the information transfer rate threshold may be set at 50 Mbps upon connecting the power supply, 100 Mbps when the remaining battery level is higher than a predetermined threshold in the battery driving mode, and 150 Mbps when the remaining battery level is lower than the threshold.

### <Third Embodiment>

In the third embodiment, an example will be described in which the CPU that handles communication processing is switched based on information other than the information transfer rate. The arrangement of a communication apparatus according to this embodiment is the same as that shown in Fig. 1, and a description thereof will not be repeated. The communication apparatus according to the embodiment can perform QoS (Quality of Service) control based on IEEE 802.11e. In IEEE 802.11e, communication data are classified into four types: voice, video, best effort, and background. The transmission priority changes depending on the communication data type. The transmission priority decreases in the order of voice, video, best effort, and background so voice has the highest transmission priority.

The communication apparatus performs communication in one of the communication modes 802.11b, 802.11g, and 802.11n of IEEE 802.11 standards. An example will be described here in which CPU switching of the multi CPU scheme is controlled in accordance with the communication data type identification result.

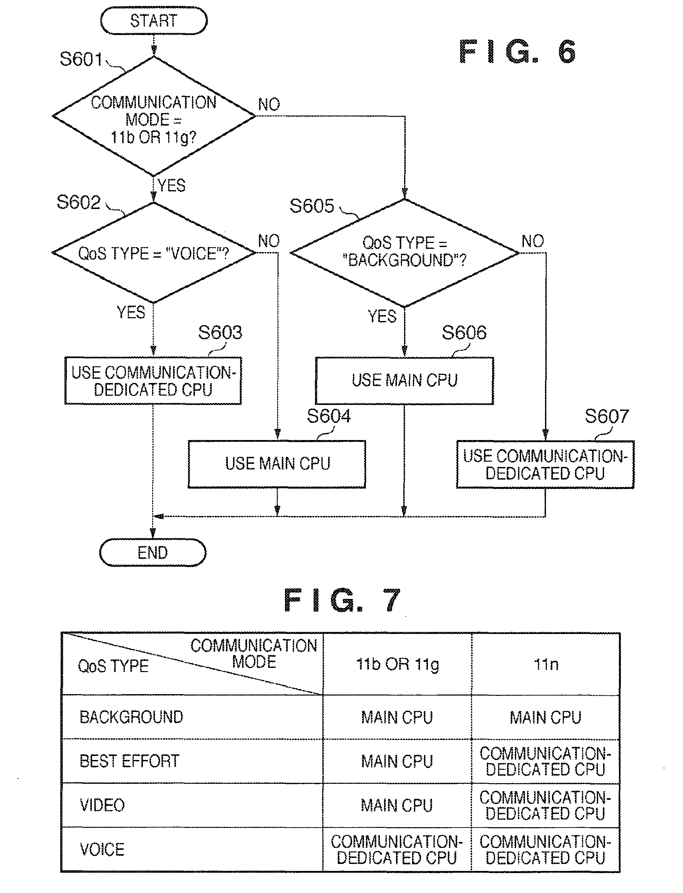

Communication processing switching will be described with reference to Fig. 6 concerning the operation of a main CPU 102. In step S601, the main CPU 102 detects the current communication mode and determines whether it is 802.11b or 802.11g (first communication mode). If the current communication mode is 802.11b or 802.11g, the process advances to step S602. In a communication mode (second communication mode) other than 802.11b and 802.11g, that is, in 802.11n, the process advances to step S605.

In step S602, the main CPU 102 determines whether the current communication data type is "voice". If the communication data type is "voice", the process advances to step S603. If the communication data type is not "voice", that is, if the communication data type is one of "video", "best effort", and "background", the process advances to step S604. In step S603, if a communication-dedicated CPU 101 is not currently being used, the main CPU 102 switches the communication processing to the communication-dedicated CPU 101. In step S604, if the communication-dedicated CPU 101 is currently being used, the main CPU 102 switches the communication processing to itself.

In step S605, the main CPU 102 determines whether the current communication data type is "background". If the communication data type is "background", the process advances to step S606. If the communication data type is not "background", that is, if the communication data type is one of "voice", "video", and "best effort", the process advances to step S607. In step S606, if the communication-dedicated CPU 101 is currently being used, the main CPU 102 switches the communication processing to itself. In step S607, if the communication-dedicated CPU 101 is not currently being used, the main CPU 102 switches the communication processing to the communication-dedicated CPU 101.

As is apparent from the results of processing of the above-described flowchart, the CPU that handles communication processing is determined as shown in Fig. 7 in accordance with the communication mode and the communication data type. When communicating in 802.11b or 802.11g (first communication mode), the communication-dedicated CPU 101 handles the communication processing only when the communication data type is "voice". For other data communication types, the main CPU 102 handles the communication processing.

When communicating in 802.11b or 802.11g, high-speed wireless communication is impossible. For this reason, throughput may not be expected to greatly improve with respect to power consumption even when using the communication-dedicated CPU 101. The communication-dedicated CPU 101 is used only for a data type such as "voice" which needs to make the transfer delay as small as possible, thereby suppressing extra power consumption.

On the other hand, when communicating in 802.11n, high-speed wireless communication is possible. For this reason, the communication-dedicated CPU 101 is used not only when the data type is "voice" but also for "video" or "best effort". However, when the data type is "background", communication need not be processed at a high speed. Hence, the main CPU 102 is used for communication processing even in communication by 802.11n. The communication-dedicated CPU 101 is powered off when not used, as in the first and second embodiment, and this enables an operation of the processor system at lower power.

Note that in step S602, the communication-dedicated CPU 101 is used only when the data type is "voice". However, the communication-dedicated CPU 101 may be used even in video transmission to suppress the transfer delay as much as possible. Additionally, in step S605, the main CPU 102 is used only when the data type is "background". However, the main CPU 102 may be used even for "best effort". That is, the data type serving as the switching condition can appropriately be changed.

With the above-described arrangement, in the third embodiment, whether to use the communication-dedicated CPU 101 is controlled based on the communication data type. This enables an operation at lower power and also reduces the data transfer delay at the time of voice communication. Additionally, the data type criterion to be used to switch the CPU that handles communication processing is changed based on the communication mode. This allows to maintain throughput and save power.

Note that in the above description, the data type criterion to be used to switch the CPU that handles communication processing is changed based on the communication mode. However, the data type criterion may be changed based on the information transfer rate. For example, in step S601 of Fig. 6, the main CPU may determine whether the information transfer rate is equal to or higher than a predetermined threshold instead of the communication mode. The above-described processing of switching the CPU that handles communication processing need not always be executed by the main CPU. It may be executed by the CPU that is currently executing communication processing.

The switching condition is not limited to those described above. The processing of switching the CPU that handles communication may be executed based on the presence/absence of use of the channel bonding technique or MIMO (Multiple-Input and Multiple-Output) technique of 802.11n. Note that the channel bonding technique is a technique of performing communication by bundling a plurality of (for example two) adjacent channels of wireless LAN. This technique makes the transfer rate a bit more than twice higher by communicating using a bandwidth of 40 MHz corresponding to two channels in place of the normal bandwidth of 20 MHz corresponding to one channel. MIMO is a technique of dividing transmission data into a plurality of signals (streams) in advance and simultaneously transmitting them via a single channel from a plurality of antennas. For example, in step S301 in Fig. 3, instead of the determination based on the information transfer rate, the main CPU 102 may determine whether a CPU currently executing communication processing is using the MIMO technique. If the MIMO technique is being used, the process advances to step S302. If the MIMO technique is not being used, the process advances to step S304. Alternatively, in step S301 in Fig. 3, instead of the determination based on the information transfer rate, the main CPU 102 may determine whether a CPU currently executing communication processing is using the channel bonding technique. If the channel bonding technique is being used, the process advances to step S302. If the channel bonding technique is not being used, the process advances to step S304.

Alternatively, switching the CPU that handles communication may be executed based on whether the processor system 1 is using RTP (Real-time Transport Protocol), that is the communication protocol of higher layer than that of the communication protocol of the wireless LAN communication unit 2. CPU switching may be executed using a higher-layer communication protocol such as FTP (File Transfer Protocol) or PTP (Picture Transfer Protocol) as the criterion. That is, switching to a predetermined CPU may be done based on whether the processor system 1 is using a predetermined communication protocol in a higher layer than that of the communication protocol of the wireless LAN communication unit 2. For example, in step S301 in Fig. 3, instead of the determination based on the information transfer rate, the main CPU 102 may determine whether a CPU currently executing communication processing is using RTP. If RTP is being used, the process advances to step S302. If RTP is not being used, the process advances to step S304. Alternatively, in step S301 in Fig. 3, instead of the determination based on the information transfer rate, the main CPU 102 may determine whether a CPU currently executing communication processing is being using PTP. If PTP is used, the process advances to step S302. If PTP is not being used, the process advances to step S304. Alternatively, in step S301 in Fig. 3, instead of the determination based on the information transfer rate, the main CPU 102 may determine whether a CPU currently executing communication processing is using FTP. If FTP is being used, the process advances to step S304. If FTP is not being used, the process advances to step S302.

Alternatively, communication processing may be switched between the main CPU 102 and the communication-dedicated CPU 101 by combining two or more of the above-described plurality of conditions. For example, in step S301 in Fig. 3, instead of the determination based on the information transfer rate, the main CPU 102 may determine whether a CPU currently executing communication processing is using both of the channel bonding and MIMO techniques. If both of the techniques are being used, the process advances to step S302. If one or both of the techniques are not being used, the process advances to step S304.

### Other Embodiments

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium). The program may be carried on a carrier medium such as a transmission medium (signal) or a computer readable storage medium.

According to the present invention it is decided, during communication by the communication means and based on one of a transfer condition of communication by the communication means (e.g. data transfer rate, channel bonding, MIMO, communication protocol) and priority of data to be communicated, which one of the main processing means and the communication processing means should control the communication processing by the communication means.

## Claims

1. An information processing apparatus comprising:
communication means (2) configured to communicate with another apparatus;
communication processing means (101) capable of controlling the communication processing by the communication means;
**characterized by**
main processing means (102) capable of controlling communication processing by the communication means, without using the communication processing means, and of controlling other processing;
deciding means (102) configured to decide, during communication by the communication means and based on one of a transfer condition of communication by the communication means and priority of data to be communicated, which one of the main processing means (102) and the communication processing means (101) should control the communication processing by the communication means; and
power control means (109) configured to power off the communication processing means (101) in the case the deciding means (102) decides that the main processing means (102) should control the communication processing by the communication means.

2. The apparatus according to claim 1, further comprising switching means (102) configured to switch, based on the decision by the deciding means, between communication processing controlled by the main processing means and communication processing controlled by the communication processing means.

3. The apparatus according to claim 1 or 2, further comprising storage means (103) write-accessible and read-accessible by both the main processing means and the communication processing means,
wherein the means, decided by the deciding means to control the communication processing, is arranged to read out a communication parameter stored in the storage means which enables it to control the communication processing after the decision by the deciding means.

4. The apparatus according to claim 3, wherein the communication parameter includes at least one of a packet sequence number and an encryption key.

5. The apparatus according to any one of claims 1 to 4, further comprising detection means (113) configured to detect a transfer rate of the communication by the communication means as the transfer condition.

6. The apparatus according to any one of claims 1 to 5, wherein the deciding means is configured to decide that the main processing means should control the communication processing when a transfer rate of the communication by the communication means is lower than a threshold.

7. The apparatus according to claim 6, further comprising power source determination means (102) configured to determine the source of power supplied to the apparatus,
wherein the switching means is configured to change the threshold in accordance with the power supply source determined by the power source determination means.

8. The apparatus according to any one of claims 1 to 7, further comprising identification means (102) configured to identify the type of data to be communicated by the communication means.

9. The apparatus according to any one of claims 1 to 4, wherein the deciding means decides the means to control the communication processing, based on whether the communication means is communicating using a channel bonding technique of 802.11n.

10. The apparatus according to any one of claims 1 to 4, wherein the deciding means decides the means to control the communication processing, based on whether the communication means is communicating using a MIMO technique of 802.11n.

11. The apparatus according to any one of claims 1 to 4, wherein the deciding means decides the means to control the communication processing, based on whether the processing means currently controlling the communication means is using a communication protocol of higher layer than that of a communication protocol used in communication by the communication means.

12. A method of controlling an information processing apparatus comprising:
communication means (2) configured to communicate with another apparatus;
communication processing means (101) capable of controlling the communication processing by the communication means; and
main processing means (102) capable of controlling communication processing by the communication means, without using the communication processing means, and of controlling other processing, the method comprising:
deciding (S301), during communication by the communication means and based on one of a transfer condition of communication by the communication means and priority of data to be communicated, which one of the main processing means and the communication processing means should control the communication processing by the communication means; and
powering off (S306) the communication processing means when it is decided that the main processing means should control the communication processing by the communication means.

13. A computer program which on execution by a programmable apparatus comprising: communication means (2) configured to communicate with another apparatus; communication processing means (101) capable of controlling the communication processing by the communication means; and main processing means (102) capable of controlling communication processing by the communication means, without using the communication processing means, and of controlling other processing, causes the apparatus to carry out the method of claim 12.

## Patentansprüche

1. Informationsverarbeitungsvorrichtung, umfassend:
eine Kommunikationseinrichtung (2), die konfiguriert ist, um mit einer anderen Vorrichtung zu kommunizieren;
eine Kommunikationsverarbeitungseinrichtung (101), die in der Lage ist, die Kommunikationsverarbeitung durch die Kommunikationseinrichtung zu steuern;
**gekennzeichnet durch**:
eine Hauptverarbeitungseinrichtung (102), die in der Lage ist, eine Kommunikationsverarbeitung **durch** die Kommunikationseinrichtung ohne Verwendung der Kommunikationsverarbeitungseinrichtung zu steuern, sowie eine andere Verarbeitung zu steuern;
eine Festlegungseinrichtung (102), die konfiguriert ist, um während der Kommunikation **durch** die Kommunikationseinrichtung und basierend auf einer Übertragungsbedingung der Kommunikation **durch** die Kommunikationseinrichtung oder der Priorität von zu kommunizierenden Daten festzulegen, welche von der Hauptverarbeitungseinrichtung (102) und der Kommunikationsverarbeitungseinrichtung (101) die Kommunikationsverarbeitung der Kommunikationseinrichtung steuern soll;
und
eine Energiesteuereinrichtung (109), die konfiguriert ist, um die Energieversorgung der Kommunikationsverarbeitungseinrichtung (101) abzuschalten, falls die Festlegungseinrichtung (102) festlegt, dass die Hauptverarbeitungseinrichtung (102) die Kommunikationsverarbeitung der Kommunikationseinrichtung steuern soll.

2. Vorrichtung nach Anspruch 1, ferner umfassend eine Umschalteinrichtung (102), die konfiguriert ist, um basierend auf der Festlegung durch die Festlegungseinrichtung zwischen von der Hauptverarbeitungseinrichtung gesteuerter Kommunikationsverarbeitung und von der Kommunikationsverarbeitungseinrichtung gesteuerter Kommunikationsverarbeitung umzuschalten.

3. Vorrichtung nach Anspruch 1 oder 2, ferner umfassend eine Speichereinrichtung (103), auf die sowohl von der Hauptverarbeitungseinrichtung als auch von der Kommunikationsverarbeitungseinrichtung zum Schreiben und Lesen zugegriffen werden kann,
wobei diejenige Einrichtung, die von der Festlegungseinrichtung zum Steuern der Kommunikationsverarbeitung festgelegt wird, dazu ausgebildet ist, einen in der Speichereinrichtung gespeicherten Kommunikationsparameter auszulesen, der es ihr ermöglicht, nach der Festlegung durch die Festlegungseinrichtung die Kommunikationsverarbeitung zu steuern.

4. Vorrichtung nach Anspruch 3, wobei der Kommunikationsparameter zumindest eine Paketsequenznummer und/oder einen Chiffrierschlüssel enthält.

5. Vorrichtung nach einem der Ansprüche 1 bis 4, ferner umfassend eine Ermittlungseinrichtung (113), die konfiguriert ist, um eine Übertragungsrate der Kommunikation der Kommunikationseinrichtung als die Übertragungsbedingung zu ermitteln.

6. Vorrichtung nach einem der Ansprüche 1 bis 5, wobei die Festlegungseinrichtung konfiguriert ist, um festzulegen, dass die Hauptverarbeitungseinrichtung die Kommunikationsverarbeitung steuern soll, wenn eine Übertragungsrate der Kommunikation der Kommunikationseinrichtung niedriger als ein Schwellenwert ist.

7. Vorrichtung nach Anspruch 6, ferner umfassend eine Energiequellenfeststelleinrichtung (102), die konfiguriert ist, um die Quelle von die Vorrichtung versorgender Energie festzustellen,
wobei die Umschalteinrichtung konfiguriert ist, um den Schwellenwert entsprechend der von der Energiequellenfeststelleinrichtung festgestellten Energieversorgungsquelle zu ändern.

8. Vorrichtung nach einem der Ansprüche 1 bis 7, ferner umfassend eine Identifizierungseinrichtung (102), die konfiguriert ist, um den Typ der von der Kommunikationseinrichtung zu kommunizierenden Daten zu identifizieren.

9. Vorrichtung nach einem der Ansprüche 1 bis 4, wobei die Festlegungseinrichtung die Einrichtung zum Steuern der Kommunikationsverarbeitung basierend darauf festlegt, ob die Kommunikationseinrichtung unter Verwendung einer Kanalbündelungstechnik gemäß 802.11n kommuniziert.

10. Vorrichtung nach einem der Ansprüche 1 bis 4, wobei die Festlegungseinrichtung die Einrichtung zum Steuern der Kommunikationsverarbeitung basierend darauf festlegt, ob die Kommunikationseinrichtung unter Verwendung einer MIMO-Technik gemäß 802.11 n kommuniziert.

11. Vorrichtung nach einem der Ansprüche 1 bis 4, wobei die Festlegungseinrichtung die Einrichtung zum Steuern der Kommunikationsverarbeitung basierend darauf festlegt, ob die Verarbeitungseinrichtung, welche die Kommunikationseinrichtung aktuell steuert, ein Kommunikationsprotokoll einer höheren Ebene als die Ebene eines für die Kommunikation der Kommunikationseinrichtung verwendeten Kommunikationsprotokolls verwendet.

12. Verfahren zum Steuern einer Informationsverarbeitungsvorrichtung, umfassend:
eine Kommunikationseinrichtung (2), die konfiguriert ist, um mit einer anderen Vorrichtung zu kommunizieren;
eine Kommunikationsverarbeitungseinrichtung (101), die in der Lage ist, die Kommunikationsverarbeitung durch die Kommunikationseinrichtung zu steuern; und
eine Hauptverarbeitungseinrichtung (102), die in der Lage ist, eine Kommunikationsverarbeitung durch die Kommunikationseinrichtung ohne Verwendung der Kommunikationsverarbeitungseinrichtung zu steuern, sowie eine andere Verarbeitung zu steuern;
wobei das Verfahren umfasst:
Festlegen (S301), während der Kommunikation durch die Kommunikationseinrichtung und basierend auf einer Übertragungsbedingung der Kommunikation durch die Kommunikationseinrichtung oder der Priorität von zu kommunizierenden Daten, welche von der Hauptverarbeitungseinrichtung und der Kommunikationsverarbeitungseinrichtung die Kommunikationsverarbeitung durch die Kommunikationseinrichtung steuern soll; und
Abschalten (S306) der Energieversorgung der Kommunikationsverarbeitungseinrichtung, wenn festgelegt wird, dass die Hauptverarbeitungseinrichtung die Kommunikationsverarbeitung der Kommunikationseinrichtung steuern soll.

13. Computerprogramm, welches bei Ausführung durch eine programmierbare Vorrichtung, die umfasst: eine Kommunikationseinrichtung (2), die konfiguriert ist, um mit einer anderen Vorrichtung zu kommunizieren; eine Kommunikationsverarbeitungseinrichtung (101), die in der Lage ist, die Kommunikationsverarbeitung durch die Kommunikationseinrichtung zu steuern; und eine Hauptverarbeitungseinrichtung (102), die in der Lage ist, eine Kommunikationsverarbeitung durch die Kommunikationseinrichtung ohne Verwendung der Kommunikationsverarbeitungseinrichtung zu steuern, sowie andere Verarbeitungen zu steuern, die Vorrichtung veranlasst das Verfahren nach Anspruch 12 durchzuführen.

## Revendications

1. Appareil de traitement de l'information comprenant :
un moyen de communication (2) configuré pour communiquer avec un autre appareil ;
un moyen de traitement de communication (101) capable de commander le traitement de la communication par le moyen de communication ;
**caractérisé par** :
un moyen de traitement principal (102) capable de commander le traitement de la communication par le moyen de communication, sans utiliser le moyen de traitement de communication, et de commander d'autres traitements ;
un moyen de décision (102) configuré pour décider, pendant la communication par le moyen de communication et en fonction soit d'une situation de transfert de la communication par le moyen de communication, soit de la priorité des données à communiquer, quel est parmi le moyen de traitement principal (102) et le moyen de traitement de communication (101) celui qui doit commander le traitement de la communication par le moyen de communication ; et
un moyen de commande de l'alimentation (109) configuré pour couper l'alimentation du moyen de traitement de communication (101) lorsque le moyen de décision (102) décide que le moyen de traitement principal (102) doit commander le traitement de la communication par le moyen de communication.

2. Appareil selon la revendication 1, comprenant en outre un moyen de commutation (102) configuré pour commuter, en fonction de la décision du moyen de décision, entre le traitement de la communication commandé par le moyen de traitement principal et le traitement de la communication commandé par le moyen de traitement de communication.

3. Appareil selon la revendication 1 ou 2, comprenant en outre un moyen de stockage (103) accessible en écriture et en lecture à la fois par le moyen de traitement principal et par le moyen de traitement de communication ;
dans lequel le moyen, désigné par le moyen de décision pour commander le traitement de la communication, est conçu pour lire un paramètre de communication stocké dans le moyen de stockage qui lui permet de commander le traitement de la communication après la décision prise par le moyen de décision.

4. Appareil selon la revendication 3, dans lequel le paramètre de communication comprend au moins l'un d'un numéro de séquence de paquets et d'une clef de chiffrement.

5. Appareil selon l'une quelconque des revendications 1 à 4, comprenant en outre un moyen de détection (113) configuré pour détecter le débit de transfert de la communication par le moyen de communication pour constituer la situation du transfert.

6. Appareil selon l'une quelconque des revendications 1 à 5, dans lequel le moyen de décision est configuré pour décider que le moyen de traitement principal doit commander le traitement de la communication lorsque le débit de transfert de la communication par le moyen de communication est inférieur à un seuil.

7. Appareil selon la revendication 6, comprenant en outre un moyen de détermination de la source d'alimentation (102) configuré pour déterminer la source de l'alimentation fournie à l'appareil ;
dans lequel le moyen de commutation est configuré pour modifier le seuil en fonction de la source d'alimentation électrique déterminée par le moyen de détermination de la source d'alimentation.

8. Appareil selon l'une quelconque des revendications 1 à 7, comprenant en outre un moyen d'identification (102) configuré pour identifier le type de données à communiquer par le moyen de communication.

9. Appareil selon l'une quelconque des revendications 1 à 4, dans lequel le moyen de décision décide du moyen qui doit commander le traitement de la communication en fonction du fait de savoir si le moyen de communication communique en utilisant un mécanisme d'agrégation de canaux de la norme 802.11n.

10. Appareil selon l'une quelconque des revendications 1 à 4, dans lequel le moyen de décision décide du moyen qui doit commander le traitement de la communication en fonction du fait que le moyen de communication communique ou non en utilisant un mécanisme MIMO de la norme 802.11n.

11. Appareil selon l'une quelconque des revendications 1 à 4, dans lequel le moyen de décision décide du moyen qui doit commander le traitement de la communication en fonction du fait que le moyen de traitement qui commande actuellement le moyen de communication utilise ou non un protocole de communication d'une couche supérieure à celui d'un protocole de communication utilisé dans la communication par le moyen de communication.

12. Procédé de commande d'un appareil de traitement de l'information, comprenant :
un moyen de communication (2) configuré pour communiquer avec un autre appareil ;
un moyen de traitement de communication (101) capable de commander le traitement de la communication par le moyen de communication ; et
un moyen de traitement principal (102) capable de commander le traitement de la communication par le moyen de communication, sans utiliser le moyen de traitement de communication, et de commander d'autres traitements ;
le procédé comprenant les étapes consistant à :
décider (S301), pendant la communication par le moyen de communication et en fonction soit d'une situation de transfert de la communication par le moyen de communication, soit de la priorité des données à communiquer, quel est parmi le moyen de traitement principal et le moyen de traitement de communication celui qui doit commander le traitement de la communication par le moyen de communication ; et
couper l'alimentation (S306) du moyen de traitement de communication lorsqu'il est décidé que le moyen de traitement principal doit commander le traitement de la communication par le moyen de communication.

13. Programme d'ordinateur qui, lorsqu'il est exécuté par un appareil programmable comprenant : un moyen de communication (2) configuré pour communiquer avec un autre appareil ; un moyen de traitement de communication (101) capable de commander le traitement de la communication par le moyen de communication ; et un moyen de traitement principal (102) capable de commander le traitement de la communication par le moyen de communication, sans utiliser le moyen de traitement de communication, et de commander d'autres traitements, amène l'appareil à exécuter le procédé selon la revendication 12.
